# EUROPEAN PATENT SPECIFICATION

(11) **EP 3 875 165 B1**
(45) Date of publication and mention of the grant of the patent: **20.12.2023**
(21) Application number: 21159459.3
(22) Date of filing: 26.02.2021
(51) Int. Cl.: B01D 51/10, B01D 53/14, B01D 53/18, B01D 53/78, F24D 11/00

(54) **ARRANGEMENT AND METHOD FOR TRANSFERRING HEAT FROM A WET SCRUBBER TO A DISTRICT HEATING NETWORK**
ANORDNUNG UND VERFAHREN ZUR WÄRMEÜBERTRAGUNG VON EINEM NASSWÄSCHER ZU EINEM ÖRTLICHEN FERNWÄRMENETZ
AGENCEMENT ET PROCÉDÉ DE TRANSFERT DE CHALEUR A PARTIR D'UN LAVEUR A UN RÉSEAU DE CHAUFFAGE URBAIN

(30) Priority: 04.03.2020 FI 20205224
(43) Date of publication of application: 08.09.2021
(73) Proprietor: Caligo Industria Oy, 20810 Turku (FI)
(72) Inventor: NUMMILA, Mika, 40200 Jyväskylä (FI)
(74) Representative: Berggren Oy

(56) References cited:
- EP-A2- 2 644 993
- CN-A- 106 482 141
- CN-A- 108 266 777
- FI-A1- 20 185 835
- US-A- 3 890 787

## Description

### TECHNICAL FIELD OF THE INVENTION

The present invention relates to an arrangement and a method for transferring heat according to the preambles of the appended independent claims.

### BACKGROUND OF THE INVENTION

Various industrial plants, such as refineries, paper mills and power plants, produce waste gases, which typically contain a large amount of heat. This heat can be recovered and utilized in many applications, such as a district heating network.

The heat contained in the waste gas can be transferred to district heating water with a wet scrubber. The waste gas is conveyed through the wet scrubber and cooled therein with scrubbing liquid, whereby water vapour contained in the waste gas condenses and the released condensing heat is transferred to the scrubbing liquid. The amount of heat that is released in the scrubbing process depends on the moisture content of the waste gas and the temperature of the scrubbing liquid. From the scrubbing liquid, the heat is transferred to the district heating water, for example, with a heat exchanger.

A problem associated with the above arrangement is that the heating of the district heating water is dependent on the production of the waste gas. The amount of the waste gas produced by an industrial plant can vary significantly as a function of time and there can even be periods of time where the waste gas is not produced at all. The effects of the variations in the production of the waste gas can be reduced with an auxiliary heating system that enables to heat the district heating water when a required amount of heat cannot be recovered from the waste gas. The disadvantage of the auxiliary heating system is, however, that the effects of the variations in the production of the waste gas are reduced at the expense of an increased consumption of electricity. Another problem of the above arrangement is that the heat of the waste gas, which is not needed to heat the district heating water, is dissipated into the atmosphere.

Document EP 2644993 discloses a method and arrangement for transferring heat from flue gas into fluid. Document US 3890787 discloses a method and means for heating buildings in a district heating system with waste heat from a thermal power plant. Document CN 108266777 discloses an electric peak load regulation gas-fired cogeneration waste heat recovery device and method.

### OBJECTIVES OF THE INVENTION

It is the main objective of the present invention to reduce or even eliminate the prior art problems presented above.

It is an objective of the present invention to provide an arrangement and a method for transferring heat. In more detail, it is an objective of the invention to provide an arrangement and a method enabling to reduce the effects of variations in the production of waste gas in the heating of the district heating water. It is a further objective of the invention to provide an arrangement and a method enabling to increase the heat recovery from the waste gas to district heating water.

In order to realise the above-mentioned objectives, the arrangement and the method according to the invention are characterised by what is presented in the characterising portions of the appended independent claims. Advantageous embodiments of the invention are described in the dependent claims.

### DESCRIPTION OF THE INVENTION

An arrangement for transferring heat according to the invention comprises a wet scrubber configured to transfer heat from waste gas to scrubbing liquid, a first heat exchanger having a first side coupled to the wet scrubber and a second side coupled to a return side and a supply side of a district heating network, means for conveying scrubbing liquid from the wet scrubber through the first side of the first heat exchanger to the wet scrubber, a heat accumulator containing heat storage liquid, and a second heat exchanger having a first side coupled to a top part and a bottom part of the heat accumulator and a second side coupled to the return side and the supply side of the district heating network.

The arrangement according to the invention enables the transfer of heat (energy) from the waste gas to the district heating water that is conveyed in the district heating network. The waste gas, which can be produced in an industrial plant, such as a refinery, a paper mill or a power plant, is conveyed through the wet scrubber. The waste gas can be conveyed from the industrial plant to the wet scrubber through a pipe. In the wet scrubber, the waste gas is cooled with scrubbing liquid, whereby water vapour contained in the waste gas condenses and the released condensing heat is transferred to the scrubbing liquid. The scrubbing liquid may contain water and additional chemicals or substances. The amount of heat that is released in the scrubbing process depends on the moisture content of the waste gas and the temperature of the scrubbing liquid.

The wet scrubber may comprise one or more heat exchange zones, through which the waste gas is passed. The heat exchange zone comprises a random packing bed that acts as a heat and mass transfer surface. The waste gas is cooled by spraying scrubbing liquid over the packing bed, as a result of which heat is released from the waste gas and recovered into the scrubbing liquid. The scrubbing liquid can be circulated through one or more heat exchangers in order to transfer heat from the scrubbing liquid to the district heating water.

The first heat exchanger is used to transfer heat from the scrubbing liquid to the district heating water. The district heating water to be heated in the first heat exchanger is the return water of the district heating network. The first side of the first heat exchanger is coupled to the wet scrubber, and the second side of the first heat exchanger is coupled between the return side and the supply side of the district heating network. The second side of the first heat exchanger can be coupled between a return pipe and a supply pipe of the district heating network. The (return) district heating water to be heated is conveyed to the first heat exchanger in the return pipe of the district heating network. From the first heat exchanger, the heated (supply) district heating water is supplied back to the district heating network in the supply pipe of the district heating network. The temperature of the district heating water to be heated can be, for example, 45-60 °C, and the temperature of the heated district heating water can be, for example, 80-100 °C.

The means for conveying scrubbing liquid from the wet scrubber through the first side of the first heat exchanger to the wet scrubber may comprise pipes coupled between the wet scrubber and the first heat exchanger, and a pump for pumping (circulating) the scrubbing liquid between the wet scrubber and the first side of the first heat exchanger through the pipes.

The arrangement according to the invention enables the transfer of heat (energy) to and from the heat accumulator by using the second heat exchanger. Heat can be stored into the heat accumulator when heat from the waste gas is transferred to the district heating water, especially when the waste gas contains so much heat that all the heat cannot be supplied to the district heating network. Heat can be released from the heat accumulator to the district heating water when a required amount of heat cannot be recovered from the waste gas.

The second heat exchanger transfers heat from the first side to the second side or from the second side to the first side, depending on the temperatures of the heat storage liquid and the district heating water that are conveyed through the second heat exchanger. In the second heat exchanger, heat is transferred from a higher temperature side to a lower temperature side.

The first side of the second heat exchanger is coupled between the top part and the bottom part of the heat accumulator. The first side of the second heat exchanger can be coupled to the heat accumulator with pipes. The heat storage liquid from the heat accumulator can be conveyed through the first side of the second heat exchanger in both directions.

The second side of the second heat exchanger is coupled between the return side and the supply side of the district heating network. The second side of the second heat exchanger can be coupled to the return pipe and the supply pipe of the district heating network with pipes. The district heating water can be conveyed through the second side of the second heat exchanger in both directions.

When heat is stored into the heat accumulator, the (cold) heat storage liquid is conveyed from the bottom part of the heat accumulator through the first side of the second heat exchanger to the top part of the heat accumulator, and the (hot) district heating water is conveyed from the supply side of the district heating network through the second side of the second heat exchanger to the return side of the district heating network. The district heating water that is conveyed through the second side of the second heat exchanger has been heated by using the first heat exchanger. In the second heat exchanger, the heat is transferred from the district heating water to the heat storage liquid. The temperature of the heat storage liquid that flows into the second heat exchanger can be, for example, 30-45 °C, and the temperature of the heat storage liquid that flows out of the second heat exchanger can be, for example, 75-90 °C. The temperature of the district heating water that flows into the second heat exchanger can be, for example, 80-95 °C, and the temperature of the district heating water that flows out of the second heat exchanger can be, for example, 35-50 °C.

When heat is released from the heat accumulator, the (hot) heat storage liquid is conveyed from the top part of the heat accumulator through the first side of the second heat exchanger to the bottom part of the heat accumulator, and the (cold) district heating water is conveyed from the return side of the district heating network through the second side of the second heat exchanger to the supply side of the district heating network. In the second heat exchanger, the heat is transferred from the heat storage liquid to the district heating water. The temperature of the heat storage liquid that flows into the second heat exchanger can be, for example, 75-90 °C, and the temperature of the heat storage liquid that flows out of the second heat exchanger can be, for example, 42-57 °C. The temperature of the district heating water that flows into the second heat exchanger can be, for example, 40-55 °C, and the temperature of the district heating water that flows out of the second heat exchanger can be, for example, 72-85 °C.

The heat accumulator functions as a heat storage into which heat can be stored and from which heat can be released. The heat is stored in the heat storage liquid, the temperature of which gradually increases from the bottom of the heat accumulator upwards. The heat accumulator is typically operating so that the cold heat storage liquid, as heavier, is stratified to the bottom of the heat accumulator while the hot heat storage liquid is on the top of the heat accumulator. The thermocline varies in height during the charging and discharging of the heat accumulator. At the bottom part of the heat accumulator the temperature of the heat storage liquid can be, for example, 30-45 °C, and at the top part of the heat accumulator the temperature of the heat storage liquid can be, for example, 75-90 °C. The heat storage liquid may contain water and, in some cases, also salts.

The heat accumulator may comprise an upright container that can be made of steel. The volume of the heat accumulator can be, for example, 500-20000 m³. The arrangement may comprise one or a plurality of heat accumulators. The heat accumulators are preferably arranged side by side and coupled to each other. Typically, the heat accumulator(s) is(are) operating at atmospheric pressure.

The arrangement further comprises an evaporator having a first side and a second side, the first side being coupled to the first side of the second heat exchanger and the bottom part of the heat accumulator, a condenser having a first side and a second side, the first side being coupled to the second side of the second heat exchanger and the supply side of the district heating network and the second side being coupled to the second side of the evaporator, and means for conveying heat transfer media between the second side of the evaporator and the second side of the condenser.

The first side of the evaporator is coupled between the first side of the second heat exchanger and the bottom part of the heat accumulator. The arrangement may comprise a pipe coupled between the first side of the second heat exchanger and the first side of the evaporator, and a pipe coupled between the first side of the evaporator and the bottom part of the heat accumulator. The first side of the condenser is coupled between the second side of the second heat exchanger and the supply side of the district heating network. The arrangement may comprise a pipe coupled between the second side of the second heat exchanger and the first side of the condenser, and a pipe coupled between the first side of the condenser and the supply pipe of the district heating network. The second sides of the evaporator and the condenser are coupled together with a closed circuit. The closed circuit contains heat transfer media that can be circulated in the closed circuit with a compressor.

The evaporator and the condenser form a heat pump in which heat is transferred by using the heat transfer media, such as ammonia (NH3, R717). In the evaporator, heat from the heat storage liquid is transferred into the heat transfer media, which evaporates into a gas. The gas is compressed to a higher-pressure level and at the same time its temperature is increased. In the condenser, the gas condenses, and the condensing heat is transferred to the district heating water.

The arrangement improves the transfer of heat from the heat storage liquid into the district heating water. After the heat storage liquid from the top part of the heat accumulator has passed through the first side of the second heat exchanger, the heat storage liquid is conveyed through the first side of the evaporator. In the evaporator, heat is transferred from the heat storage liquid to the heat transfer media that is circulated between the second sides of the evaporator and the condenser. In the condenser, heat from the heat transfer media is transferred into the district heating water that is conveyed through the first side of the condenser. The district heating water is conveyed through the first side of the condenser after it has passed through the second side of the second heat exchanger. After the heat storage liquid has passed through the evaporator, the temperature of the heat storage liquid can be, for example, 30-35 °C. By cooling the heat storage liquid below the temperature of the return district heating water, the capacity of the heat accumulator increases significantly. This reduces the needed size of the heat accumulator, even by 50 %.

According to an embodiment of the invention the arrangement comprises a third heat exchanger having a first side coupled to the wet scrubber and a second side coupled to the first side of the evaporator, means for conveying scrubbing liquid from the wet scrubber through the first side of the third heat exchanger to the wet scrubber, and means for conveying heat storage liquid between the second side of the third heat exchanger and the first side of the evaporator.

The third heat exchanger is used to transfer heat from the scrubbing liquid to the heat storage liquid. The means for conveying scrubbing liquid from the wet scrubber through the first side of the third heat exchanger to the wet scrubber may comprise pipes coupled between the wet scrubber and the third heat exchanger, and a pump for pumping (circulating) the scrubbing liquid between the wet scrubber and the first side of the third heat exchanger through the pipes. The means for conveying heat storage liquid between the second side of the third heat exchanger and the first side of the evaporator may comprise pipes coupled between the third heat exchanger and the evaporator, and a pump for pumping (circulating) the heat storage liquid between the second side of the third heat exchanger and the first side of the evaporator through the pipes.

The arrangement according to this embodiment improves the transfer of heat from the waste gas into the district heating water. The third heat exchanger transfers heat from the scrubbing liquid to the heat storage liquid that is circulated between the second side of the third heat exchanger and the first side of the evaporator. The evaporator transfers heat from the heat storage liquid to the heat transfer media, from which the heat is transferred to the district heating water by using the condenser. Preferably, the third heat exchanger is used when heat is stored into the heat accumulator.

According to an embodiment of the invention the arrangement comprises a heating unit coupled between the first side of the condenser and the supply side of the district heating network. The heating unit enables to heat the district heating water when a required amount of heat cannot be transferred from the heat storage liquid to the district heating water. The arrangement may comprise a pipe coupled between the first side of the condenser and the heating unit, and a pipe coupled between the heating unit and the supply pipe of the district heating network.

According to an embodiment of the invention the arrangement comprises means for conveying heat storage liquid from the bottom part of the heat accumulator through the first side of the second heat exchanger to the top part of the heat accumulator, and means for conveying district heating water from the supply side of the district heating network through the second side of the second heat exchanger to the return side of the district heating network. The arrangement according to this embodiment enables to store heat into the heat accumulator. This is achieved by transferring heat from the district heating water to the heat storage liquid with the second heat exchanger. The means for conveying heat storage liquid may comprise a pipe coupled between the bottom part of the heat accumulator and the first side of the second heat exchanger, and a pipe coupled between the first side of the second heat exchanger and the top part of the heat accumulator. The means for conveying heat storage liquid may also comprise a pump for pumping the heat storage liquid through the first side of the second heat exchanger. The means for conveying district heating water may comprise a pipe coupled between the supply pipe of the district heating network and the second side of the second heat exchanger, and a pipe coupled between the second side of the second heat exchanger and the return pipe of the district heating network. The means for conveying district heating water may also comprise a pump for pumping the district heating water through the second side of the second heat exchanger.

According to an embodiment of the invention the arrangement comprises means for conveying heat storage liquid from the top part of the heat accumulator through the first side of the second heat exchanger to the bottom part of the heat accumulator, and means for conveying district heating water from the return side of the district heating network through the second side of the second heat exchanger to the supply side of the district heating network. The arrangement according to this embodiment enables to release heat from the heat accumulator. This is achieved by transferring heat from the heat storage liquid to the district heating water with the second heat exchanger. The means for conveying heat storage liquid may comprise a pipe coupled between the top part of the heat accumulator and the first side of the second heat exchanger, and a pipe coupled between the first side of the second heat exchanger and the bottom part of the heat accumulator. The means for conveying heat storage liquid may also comprise a pump for pumping the heat storage liquid through the first side of the second heat exchanger. The means for conveying district heating water may comprise a pipe coupled between the return pipe of the district heating network and the second side of the second heat exchanger, and a pipe coupled between the second side of the second heat exchanger and the supply pipe of the district heating network. The means for conveying district heating water may also comprise a pump for pumping the district heating water through the second side of the second heat exchanger.

The present invention also relates to a method for transferring heat. The method comprises using a wet scrubber to transfer heat from waste gas to scrubbing liquid, conveying scrubbing liquid from the wet scrubber through a first side of a first heat exchanger to the wet scrubber, conveying district heating water from a return side of a district heating network through a second side of the first heat exchanger, whereby heat is transferred from the scrubbing liquid to the district heating water, conveying heat storage liquid from a bottom part of a heat accumulator through a first side of a second heat exchanger to a top part of the heat accumulator, and after the district heating water from the return side of the district heating network has passed through the second side of the first heat exchanger, conveying the district heating water through a second side of the second heat exchanger to the return side of the district heating network, whereby heat is transferred from the district heating water to the heat storage liquid. The method enables to store heat into the heat accumulator. This is achieved by transferring heat from the heated district heating water to the heat storage liquid with the second heat exchanger.

The method comprises conveying scrubbing liquid from the wet scrubber through a first side of a third heat exchanger to the wet scrubber, conveying heat storage liquid between a second side of the third heat exchanger and a first side of an evaporator, whereby heat is transferred from the scrubbing liquid to the heat storage liquid, conveying heat transfer media between a second side of the evaporator and a second side of a condenser, whereby heat is transferred from the heat storage liquid to the heat transfer media, and after the district heating water from the return side of the district heating network has passed through the second side of the first heat exchanger, conveying the district heating water through a first side of the condenser, whereby heat is transferred from the heat transfer media to the district heating water.

The present invention also relates to another method for transferring heat. The method comprises using a wet scrubber to transfer heat from waste gas to scrubbing liquid, conveying scrubbing liquid from the wet scrubber through a first side of a first heat exchanger to the wet scrubber, conveying district heating water from a return side of a district heating network through a second side of the first heat exchanger, whereby heat is transferred from the scrubbing liquid to the district heating water, conveying heat storage liquid from a top part of a heat accumulator through a first side of a second heat exchanger to a bottom part of the heat accumulator, and conveying district heating water from the return side of the district heating network through a second side of the second heat exchanger to a supply side of the district heating network, whereby heat is transferred from the heat storage liquid to the district heating water. The method enables to release heat from the heat accumulator. This is achieved by transferring heat from the heat storage liquid to the district heating water with the second heat exchanger.

The method comprises after the heat storage liquid from the top part of the heat accumulator has passed through the first side of the second heat exchanger, conveying the heat storage liquid through a first side of an evaporator, after the district heating water from the return side of the district heating network has passed through the second side of the second heat exchanger, conveying the district heating water through a first side of a condenser, and conveying heat transfer media between a second side of the evaporator and a second side of the condenser, whereby heat is transferred from the heat storage liquid to the district heating water.

According to an embodiment of the invention the method comprises after the district heating water from the return side of the district heating network has passed through the first side of the condenser, heating the district heating water with a heating unit.

An advantage of the invention is that it enables to reduce the effects of variations in the production of waste gas in the heating of the district heating water. Another advantage of the invention is that it enables to increase the heat recovery from the waste gas to the district heating water.

The exemplary embodiments of the invention presented in this text are not interpreted to pose limitations to the applicability of the appended claims. The verb "to comprise" is used in this text as an open limitation that does not exclude the existence of also unrecited features. The features recited in the dependent claims are mutually freely combinable unless otherwise explicitly stated.

The exemplary embodiments presented in this text and their advantages relate by applicable parts to the arrangement as well as the method according to the invention, even though this is not always separately mentioned.

### BRIEF DESCRIPTION OF THE DRAWINGS

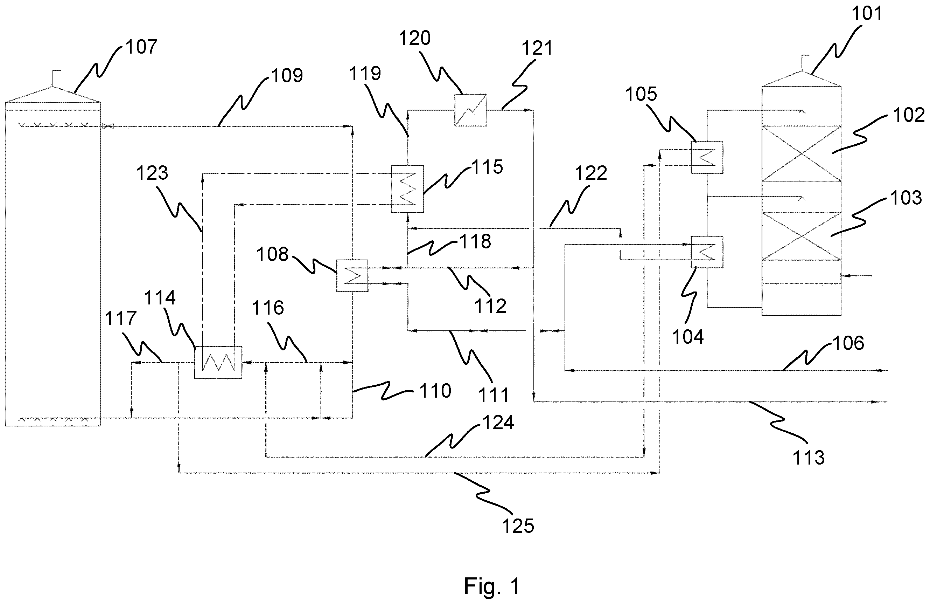

- Fig. 1: illustrates an arrangement according to an embodiment of the invention for transferring heat.

### DETAILED DESCRIPTION OF THE DRAWINGS

Fig. 1 illustrates an arrangement according to an embodiment of the invention for transferring heat. The arrangement comprises a wet scrubber 101 having heat exchange zones 102 and 103 through which waste gas passes inside the wet scrubber 101. In the heat exchange zones 102 and 103, the waste gas is cooled with scrubbing liquid, whereby water vapour contained in the waste gas condenses and the released condensing heat is transferred to the scrubbing liquid. The heated scrubbing liquid is conveyed from the wet scrubber 101 through first sides of heat exchangers 104 and 105 back to the wet scrubber 101.

A second side of the heat exchanger 104 is coupled to a return pipe 106 of a district heating network. The return pipe 106 conveys district heating water to the heat exchanger 104 wherein heat is transferred from the scrubbing liquid to the district heating water.

The arrangement comprises a heat accumulator 107 that contains heat storage liquid. Heat can be stored into and released from the heat accumulator 107 by using a heat exchanger 108. A first side of the heat exchanger 108 is coupled with a pipe 109 to a top part of the heat accumulator 107 and with a pipe 110 to a bottom part of the heat accumulator 107. A second side of the heat exchanger 108 is coupled with a pipe 111 to the return pipe 106 and with a pipe 112 to a supply pipe 113 of the district heating network. The heat exchanger 108 can transfer heat from the heat storage liquid to the district heating water or vice versa, depending on the temperatures of the heat storage liquid and the district heating water that are conveyed through the heat exchanger 108. The arrangement comprises pumps (not shown in fig. 1) for pumping the heat storage liquid through the first side of the heat exchanger 108 and the district heating water through the second side of the heat exchanger 108 in both directions.

The arrangement comprises an evaporator 114 and a condenser 115. A first side of the evaporator 114 is coupled with a pipe 116 to the first side of the heat exchanger 108 and with a pipe 117 to the bottom part of the heat accumulator 107. A first side of the condenser 115 is coupled with a pipe 118 to the second side of the heat exchanger 108 and with a pipe 119 to a heating unit 120. The heating unit 120 is further coupled with a pipe 121 to the supply pipe 113. The heat exchanger 104 is coupled with a pipe 122 to the second side of the condenser 115. Second sides of the evaporator 114 and the condenser 115 are coupled together with a closed circuit 123. The closed circuit 123 contains heat transfer media that can be circulated in the closed circuit 123 with a compressor (not shown in fig. 1). The arrangement comprises a plurality of valves (not shown in fig. 1) for controlling the flow of the heat storage liquid and the district heating water between various pipes.

A second side of the heat exchanger 105 is coupled with pipes 124 and 125 to the first side of the evaporator 114. The heat storage liquid can be conveyed between the second side of the heat exchanger 105 and the first side of the evaporator 114 by using a pump (not shown in fig. 1). In the heat exchanger 105, heat is transferred from the scrubbing liquid to the heat storage liquid and in the evaporator 114 from the heat storage liquid to the heat transfer media. By using the condenser 115, heat can be transferred from the heat transfer media to the district heating water.

The heat exchangers 104 and 105 are used to heat the district heating water. When heat is stored into the heat accumulator 107, the heated district heating water is conveyed through the pipe 112 to the heat exchanger 108 and therefrom through the pipe 111 to the return pipe 106. At the same time, the heat storage liquid from the bottom part of the heat accumulator 107 is conveyed through the pipe 110 to the heat exchanger 108 and therefrom through the pipe 109 to the top part of the heat accumulator 107. In the heat exchanger 108, heat is transferred from the heated district heating water to the heat storage liquid.

When heat is released from the heat accumulator 107, the heat storage liquid from the top part of the heat accumulator 107 is conveyed through the pipe 109 to the heat exchanger 108 and therefrom through the pipe 116 to the evaporator 114. From the evaporator 114, the heat storage liquid is conveyed through the pipe 117 to the bottom part of the heat accumulator 107. At the same time, the district heating water from the return pipe 106 is conveyed through the pipe 111 to the heat exchanger 108 and therefrom through the pipe 118 to the condenser 115. From the condenser 115, the district heating water is conveyed through the pipe 119 to the heating element 120 and therefrom through the pipe 121 to the supply pipe 113. In the heat exchanger 108, heat is transferred from the heat storage liquid to the district heating water. In the evaporator 114, heat is transferred from the heat storage liquid to the heat transfer media that is circulated between the evaporator 114 and the condenser 115. In the condenser 115, heat from the heat transfer media is transferred to the district heating water. The heating unit 120 is used to heat the district heating water when a required amount of heat cannot be transferred from the heat storage fluid to the district heating water.

Only an advantageous exemplary embodiment of the invention is described in the figure. It is clear to a person skilled in the art that the invention is not restricted only to the examples presented above, but the invention may vary within the limits of the claims presented hereafter. Some possible embodiments of the invention are described in the dependent claims, and they are not to be considered to restrict the scope of protection of the invention as such.

## Claims

1. An arrangement for transferring heat, comprising:
- a wet scrubber (101) configured to transfer heat from waste gas to scrubbing liquid,
- a first heat exchanger (104) having a first side coupled to the wet scrubber (101) and a second side coupled to a return side and a supply side of a district heating network, and
- means for conveying scrubbing liquid from the wet scrubber (101) through the first side of the first heat exchanger (104) to the wet scrubber (101),
**characterised in that** the arrangement comprises:
- a heat accumulator (107) containing heat storage liquid,
- a second heat exchanger (108) having a first side coupled to a top part and a bottom part of the heat accumulator (107) and a second side coupled to the return side and the supply side of the district heating network and the second side of the first heat exchanger (104),
- means for conveying heat storage liquid between the first side of the second heat exchanger (108) and the heat accumulator (107),
- an evaporator (114) having a first side and a second side, the first side being coupled to the first side of the second heat exchanger (108) and the bottom part of the heat accumulator (107),
- a condenser (115) having a first side and a second side, the first side being coupled to the second side of the second heat exchanger (108), the second side of the first heat exchanger (104) and the supply side of the district heating network and the second side being coupled to the second side of the evaporator (114), and
- means (123) for conveying heat transfer media between the second side of the evaporator (114) and the second side of the condenser (115).

2. The arrangement according to claim 1, **characterised in that** the arrangement comprises:
- a third heat exchanger (105) having a first side coupled to the wet scrubber (101) and a second side coupled to the first side of the evaporator (114),
- means for conveying scrubbing liquid from the wet scrubber (101) through the first side of the third heat exchanger (105) to the wet scrubber (101), and
- means (124, 125) for conveying heat storage liquid between the second side of the third heat exchanger (105) and the first side of the evaporator (114).

3. The arrangement according to claim 1 or 2, **characterised in that** the arrangement comprises a heating unit (120) coupled between the first side of the condenser (115) and the supply side of the district heating network.

4. The arrangement according to any of claims 1 to 3, **characterised in that** the arrangement comprises:
- means (109, 110) for conveying heat storage liquid from the bottom part of the heat accumulator (107) through the first side of the second heat exchanger (108) to the top part of the heat accumulator (107), and
- means (111, 112) for conveying district heating water from the supply side of the district heating network through the second side of the second heat exchanger (108) to the return side of the district heating network.

5. The arrangement according to any of claims 1 to 4, **characterised in that** the arrangement comprises:
- means (109, 110, 116, 117) for conveying heat storage liquid from the top part of the heat accumulator (107) through the first side of the second heat exchanger (108) to the bottom part of the heat accumulator (107), and
- means (111, 112) for conveying district heating water from the return side of the district heating network through the second side of the second heat exchanger (108) to the supply side of the district heating network.

6. A method for transferring heat, comprising:
- using a wet scrubber (101) to transfer heat from waste gas to scrubbing liquid,
- conveying scrubbing liquid from the wet scrubber (101) through a first side of a first heat exchanger (104) to the wet scrubber (101), and
- conveying district heating water from a return side of a district heating network through a second side of the first heat exchanger (104), whereby heat is transferred from the scrubbing liquid to the district heating water,
**characterised in that** the method comprises:
- conveying heat storage liquid from a bottom part of a heat accumulator (107) through a first side of a second heat exchanger (108) to a top part of the heat accumulator (107),
- after the district heating water from the return side of the district heating network has passed through the second side of the first heat exchanger (104), conveying the district heating water through a second side of the second heat exchanger (108) to the return side of the district heating network, whereby heat is transferred from the district heating water to the heat storage liquid,
- conveying scrubbing liquid from the wet scrubber (101) through a first side of a third heat exchanger (105) to the wet scrubber (101),
- conveying heat storage liquid between a second side of the third heat exchanger (105) and a first side of an evaporator (114), whereby heat is transferred from the scrubbing liquid to the heat storage liquid,
- conveying heat transfer media between a second side of the evaporator (114) and a second side of a condenser (115), whereby heat is transferred from the heat storage liquid to the heat transfer media, and
- after the district heating water from the return side of the district heating network has passed through the second side of the first heat exchanger (104), conveying the district heating water through a first side of the condenser (115), whereby heat is transferred from the heat transfer media to the district heating water.

7. A method for transferring heat, comprising:
- using a wet scrubber (101) to transfer heat from waste gas to scrubbing liquid,
- conveying scrubbing liquid from the wet scrubber (101) through a first side of a first heat exchanger (104) to the wet scrubber (101), and
- conveying district heating water from a return side of a district heating network through a second side of the first heat exchanger (104), whereby heat is transferred from the scrubbing liquid to the district heating water,
**characterised in that** the method comprises:
- conveying heat storage liquid from a top part of a heat accumulator (107) through a first side of a second heat exchanger (108) to a bottom part of the heat accumulator (107),
- conveying district heating water from the return side of the district heating network through a second side of the second heat exchanger (108) to a supply side of the district heating network, whereby heat is transferred from the heat storage liquid to the district heating water,
- after the heat storage liquid from the top part of the heat accumulator (107) has passed through the first side of the second heat exchanger (108), conveying the heat storage liquid through a first side of an evaporator (114),
- after the district heating water from the return side of the district heating network has passed through the second side of the second heat exchanger (108), conveying the district heating water through a first side of a condenser (115), and
- conveying heat transfer media between a second side of the evaporator (114) and a second side of the condenser (115), whereby heat is transferred from the heat storage liquid to the district heating water.

8. The method according to claim 7, **characterised in that** the method comprises:
- after the district heating water from the return side of the district heating network has passed through the first side of the condenser (115), heating the district heating water with a heating unit (120).

## Patentansprüche

1. Anordnung zur Übertragung von Wärme, die Folgendes umfasst:
- einen Nasswäscher (101), der so konfiguriert ist, dass er Wärme von Abgas auf Waschflüssigkeit überträgt,
- einen ersten Wärmetauscher (104) mit einer ersten Seite, die mit dem Nasswäscher (101) verbunden ist, und einer zweiten Seite, die mit einer Rücklaufseite und einer Versorgungsseite eines Fernwärmenetzes verbunden ist, und
- Mittel zum Fördern von Waschflüssigkeit von dem Nasswäscher (101) durch die erste Seite des ersten Wärmetauschers (104) zu dem Nasswäscher (101),
**dadurch gekennzeichnet, dass** die Anordnung Folgendes umfasst:
- einen Wärmespeicher (107), der Wärmespeicherflüssigkeit enthält,
- einen zweiten Wärmetauscher (108) mit einer ersten Seite, die mit einem oberen Teil und einem unteren Teil des Wärmespeichers (107) verbunden ist, und einer zweiten Seite, die mit der Rücklaufseite und der Zufuhrseite des Fernwärmenetzes und der zweiten Seite des ersten Wärmetauschers (104) verbunden ist,
- Mittel zum Fördern von Wärmespeicherflüssigkeit zwischen der ersten Seite des zweiten Wärmetauschers (108) und dem Wärmespeicher (107),
- einen Verdampfer (114) mit einer ersten Seite und einer zweiten Seite, wobei die erste Seite mit der ersten Seite des zweiten Wärmetauschers (108) und dem unteren Teil des Wärmespeichers (107) verbunden ist,
- einen Kondensator (115) mit einer ersten Seite und einer zweiten Seite, wobei die erste Seite mit der zweiten Seite des zweiten Wärmetauschers (108), der zweiten Seite des ersten Wärmetauschers (104) und der Versorgungsseite des Fernwärmenetzes verbunden ist und die zweite Seite mit der zweiten Seite des Verdampfers (114) verbunden ist, und
- Mittel (123) zum Fördern von Wärmeübertragungsmedien zwischen der zweiten Seite des Verdampfers (114) und der zweiten Seite des Kondensators (115) .

2. Anordnung nach Anspruch 1, **dadurch gekennzeichnet, dass** die Anordnung Folgendes umfasst:
- einen dritten Wärmetauscher (105), der mit einer ersten Seite an den Nasswäscher (101) und mit einer zweiten Seite an die erste Seite des Verdampfers (114) verbunden ist,
- Mittel zum Fördern von Waschflüssigkeit von dem Nasswäscher (101) durch die erste Seite des dritten Wärmetauschers (105) zu dem Nasswäscher (101), und
- Mittel (124, 125) zum Fördern von Wärmespeicherflüssigkeit zwischen der zweiten Seite des dritten Wärmetauschers (105) und der ersten Seite des Verdampfers (114).

3. Anordnung nach Anspruch 1 oder 2, **dadurch gekennzeichnet, dass** die Anordnung eine Heizeinheit (120) umfasst, die zwischen der ersten Seite des Kondensators (115) und der Versorgungsseite des Fernwärmenetzes verbunden ist.

4. Anordnung nach einem der Ansprüche 1 bis 3, **dadurch gekennzeichnet, dass** die Anordnung Folgendes umfasst:
- Mittel (109, 110) zum Fördern von Wärmespeicherflüssigkeit vom unteren Teil des Wärmespeichers (107) durch die erste Seite des zweiten Wärmetauschers (108) zum oberen Teil des Wärmespeichers (107), und
- Mittel (111, 112) zum Fördern von Fernheizwasser von der Vorlaufseite des Fernwärmenetzes durch die zweite Seite des zweiten Wärmetauschers (108) zur Rücklaufseite des Fernwärmenetzes.

5. Anordnung nach einem der Ansprüche 1 bis 4, **dadurch gekennzeichnet, dass** die Anordnung Folgendes umfasst:
- Mittel (109, 110, 116, 117) zum Fördern von Wärmespeicherflüssigkeit vom oberen Teil des Wärmespeichers (107) durch die erste Seite des zweiten Wärmetauschers (108) zum unteren Teil des Wärmespeichers (107), und
- Mittel (111, 112) zum Fördern von Fernheizwasser von der Rücklaufseite des Fernwärmenetzes durch die zweite Seite des zweiten Wärmetauschers (108) zur Vorlaufseite des Fernwärmenetzes.

6. Verfahren zum Übertragung von Wärme, das Folgendes umfasst:
- Verwendung eines Nasswäschers (101), um Wärme von Abgas auf Waschflüssigkeit zu übertragen,
- Fördern von Waschflüssigkeit von dem Nasswäscher (101) durch die erste Seite des ersten Wärmetauschers (104) zu dem Nasswäscher (101), und
- Fördern von Fernwärmewasser von einer Rücklaufseite eines Fernwärmenetzes durch eine zweite Seite des ersten Wärmetauschers (104), wodurch Wärme von der Waschflüssigkeit auf das Fernwärmewasser übertragen wird,
**dadurch gekennzeichnet, dass** das Verfahren Folgendes umfasst:
- Fördern von Wärmespeicherflüssigkeit von einem unteren Teil eines Wärmespeichers (107) durch eine erste Seite eines zweiten Wärmetauschers (108) zu einem oberen Teil des Wärmespeichers (107),
- nachdem das Fernwärmewasser von der Rücklaufseite des Fernwärmenetzes die zweite Seite des ersten Wärmetauschers (104) durchlaufen hat, Fördern des Fernwärmewassers durch eine zweite Seite des zweiten Wärmetauschers (108) zur Rücklaufseite des Fernwärmenetzes, wodurch Wärme vom Fernwärmewasser auf die Wärmespeicherflüssigkeit übertragen wird,
- Fördern von Waschflüssigkeit von dem Nasswäscher (101) durch die erste Seite des dritten Wärmetauschers (105) zu dem Nasswäscher (101),
- Fördern von Wärmespeicherflüssigkeit zwischen einer zweiten Seite des dritten Wärmetauschers (105) und einer ersten Seite eines Verdampfers (114), wodurch Wärme von der Waschflüssigkeit auf die Wärmespeicherflüssigkeit übertragen wird,
- Fördern von Wärmeübertragungsmedien zwischen einer zweiten Seite des Verdampfers (114) und einer zweiten Seite eines Kondensators (115), wodurch Wärme von der Wärmespeicherflüssigkeit auf die Wärmeübertragungsmedien übertragen wird, und
- nachdem das Fernwärmewasser von der Rücklaufseite des Fernwärmenetzes die zweite Seite des ersten Wärmetauschers (104) durchlaufen hat, Fördern des Fernwärmewassers durch eine erste Seite des Kondensators (115), wodurch Wärme von den Wärmeübertragungsmedien auf das Fernwärmewasser übertragen wird.

7. Verfahren zum Übertragung von Wärme, das Folgendes umfasst:
- Verwendung eines Nasswäschers (101), um Wärme von Abgas auf Waschflüssigkeit zu übertragen,
- Fördern von Waschflüssigkeit von dem Nasswäscher (101) durch die erste Seite des ersten Wärmetauschers (104) zu dem Nasswäscher (101), und
- Fördern von Fernwärmewasser von einer Rücklaufseite eines Fernwärmenetzes durch eine zweite Seite des ersten Wärmetauschers (104), wodurch Wärme von der Waschflüssigkeit auf das Fernwärmewasser übertragen wird,
**dadurch gekennzeichnet, dass** das Verfahren Folgendes umfasst:
- Fördern von Wärmespeicherflüssigkeit von einem oberen Teil eines Wärmespeichers (107) durch eine erste Seite eines zweiten Wärmetauschers (108) zu einem unteren Teil des Wärmespeichers (107),
- Fördern von Fernwärmewasser von der Rücklaufseite des Fernwärmenetzes durch eine zweite Seite des zweiten Wärmetauschers (108) zu einer Versorgungsseite des Fernwärmenetzes, wodurch Wärme von der Wärmespeicherflüssigkeit auf das Fernwärmewasser übertragen wird,
- nachdem die Wärmespeicherflüssigkeit aus dem oberen Teil des Wärmespeichers (107) die erste Seite des zweiten Wärmetauschers (108) durchlaufen hat, Fördern der Wärmespeicherflüssigkeit durch eine erste Seite eines Verdampfers (114),
- nachdem das Fernwärmewasser von der Rücklaufseite des Fernwärmenetzes die zweite Seite des zweiten Wärmetauschers (108) durchlaufen hat, Fördern des Fernwärmewassers durch eine erste Seite des Kondensators (115), und
- Fördern von Wärmeübertragungsmedien zwischen einer zweiten Seite des Verdampfers (114) und einer zweiten Seite des Kondensators (115), wodurch Wärme von der Wärmespeicherflüssigkeit auf das Fernwärmewasser übertragen wird.

8. Verfahren nach Anspruch 7, **dadurch gekennzeichnet, dass** das Verfahren Folgendes umfasst:
- nachdem das Fernwärmewasser von der Rücklaufseite des Fernwärmenetzes die erste Seite des Kondensators (115) durchlaufen hat, Erwärmen des Fernwärmewassers mit einer Heizeinheit (120).

## Revendications

1. Agencement pour la transmission de la chaleur, comprenant :
- un épurateur humide (101) conçu pour transférer la chaleur de gaz résiduaires au liquide d'épuration,
- un premier échangeur de chaleur (104) ayant un premier côté couplé à l'épurateur humide (101) et un second côté couplé à un côté retour et un côté alimentation d'un réseau de chauffage urbain, et
- des moyens pour le transport du liquide d'épuration depuis l'épurateur humide (101) à travers le premier côté du premier échangeur de chaleur (104) jusqu'à l'épurateur humide (101),
**caractérisé en ce que** l'agencement comprend :
- un accumulateur de chaleur (107) contenant un liquide de stockage de chaleur,
- un deuxième échangeur de chaleur (108) ayant un premier côté couplé à une partie supérieure et une partie inférieure de l'accumulateur de chaleur (107) et un second côté couplé au côté retour et au côté alimentation du réseau de chauffage urbain et le second côté du premier échangeur de chaleur (104),
- des moyens pour le transport du liquide de stockage de chaleur entre le premier côté du deuxième échangeur de chaleur (108) et l'accumulateur de chaleur (107),
- un évaporateur (114) ayant un premier côté et un second côté, le premier côté étant couplé au premier côté du deuxième échangeur de chaleur (108) et à la partie inférieure de l'accumulateur de chaleur (107),
- un condenseur (115) ayant un premier côté et un second côté, le premier côté étant couplé au second côté du deuxième échangeur de chaleur (108), le second côté du premier échangeur de chaleur (104) et le côté alimentation du réseau de chauffage urbain et le second côté étant couplé au second côté de l'évaporateur (114), et
- des moyens (123) de tranfert des fluides caloporteurs entre le second côté de l'évaporateur (114) et le second côté du condenseur (115).

2. Agencement selon la revendication 1, **caractérisé en ce que** l'agencement comprend :
- un troisième échangeur de chaleur (105) ayant un premier côté couplé à l'épurateur humide (101) et un second côté couplé au premier côté de l'évaporateur (114),
- des moyens de transport du liquide d'épuration depuis l'épurateur humide (101) à travers le premier côté du troisième échangeur de chaleur (105) jusqu'à l'épurateur humide (101), et
- des moyens (124, 125) de transport du liquide de stockage de chaleur entre le second côté du troisième échangeur de chaleur (105) et le premier côté de l'évaporateur (114).

3. Agencement selon la revendication 1 ou 2, **caractérisé en ce que** l'agencement comprend une unité de chauffage (120) couplée entre le premier côté du condenseur (115) et le côté alimentation du réseau de chauffage urbain.

4. Agencement selon l'une quelconque des revendications 1 à 3, **caractérisé en ce que** l'agencement comprend :
- des moyens (109, 110) de transport du liquide de stockage de chaleur depuis la partie inférieure de l'accumulateur de chaleur (107) à travers le premier côté du deuxième échangeur de chaleur (108) jusqu'à la partie supérieure de l'accumulateur de chaleur (107), et
- des moyens (111, 112) de transport de l'eau de chauffage urbain depuis le côté alimentation du réseau de chauffage urbain à travers le second côté du deuxième échangeur de chaleur (108) jusqu'au côté retour du réseau de chauffage urbain.

5. Agencement selon l'une quelconque des revendications 1 à 4, **caractérisé en ce que** l'agencement comprend :
- des moyens (109, 110, 116, 117) de transport du liquide de stockage de chaleur depuis la partie supérieure de l'accumulateur de chaleur (107) à travers le premier côté du deuxième échangeur de chaleur (108) jusqu'à la partie inférieure de l'accumulateur de chaleur (107), et
- des moyens (111, 112) de transport de l'eau de chauffage urbain depuis le côté retour du réseau de chauffage urbain à travers le second côté du deuxième échangeur de chaleur (108) jusqu'au côté alimentation du réseau de chauffage urbain.

6. Procédé de transfert de chaleur, comprenant :
- l'utilisation d'un épurateur humide (101) pour transférer la chaleur de gaz résiduaires jusqu'au liquide d'épuration,
- le transport du liquide d'épuration depuis l'épurateur humide (101) à travers un premier côté d'un premier échangeur de chaleur (104) jusqu'à l'épurateur humide (101), et
- le transport de l'eau de chauffage urbain depuis un côté retour d'un réseau de chauffage urbain à travers un second côté du premier échangeur de chaleur (104), moyennant quoi la chaleur est transférée depuis le liquide d'épuration jusqu'à l'eau de chauffage urbain,
**caractérisé en ce que** le procédé comprend :
- le transport d'un liquide de stockage de chaleur depuis une partie inférieure d'un accumulateur de chaleur (107) à travers un premier côté d'un deuxième échangeur de chaleur (108) jusqu'à une partie supérieure de l'accumulateur de chaleur (107),
- après que l'eau de chauffage urbain du côté retour du réseau de chauffage urbain a traversé le second côté du premier échangeur de chaleur (104), le transport de l'eau de chauffage urbain à travers un second côté du deuxième échangeur de chaleur (108) vers le côté retour du réseau de chauffage urbain, la chaleur est transférée de l'eau de chauffage urbain jusqu'au liquide accumulateur de chaleur,
- le transport du liquide d'épuration depuis l'épurateur humide (101) à travers un premier côté d'un troisième échangeur de chaleur (105) jusqu'à l'épurateur humide (101),
- le transport du liquide de stockage de chaleur entre un second côté du troisième échangeur de chaleur (105) et un premier côté d'un évaporateur (114), moyennant quoi la chaleur est transférée depuis le liquide d'épuration jusqu'au liquide de stockage de chaleur,
- le transport du transfert de fluides caloporteurs entre un second côté de l'évaporateur (114) et un second côté d'un condenseur (115), moyennant quoi la chaleur est transférée depuis le liquide de stockage de chaleur jusqu'aux fluides caloporteurs, et
- après que l'eau de chauffage urbain provenant du côté retour du réseau de chauffage urbain est passée à travers le second côté du premier échangeur de chaleur (104), le transport de l'eau de chauffage urbain à travers un premier côté du condenseur (115), moyennant quoi la chaleur est transférée depuis les fluides caloporteurs jusqu'à l'eau du chauffage urbain.

7. Procédé de transfert de chaleur, comprenant :
- l'utilisation d'un épurateur humide (101) pour transférer la chaleur des gaz résiduaires jusqu'au liquide d'épuration,
- le transport du liquide d'épuration depuis l'épurateur humide (101) à travers un premier côté d'un premier échangeur de chaleur (104) jusqu'à l'épurateur humide (101), et
- le transport de l'eau de chauffage urbain depuis un côté retour d'un réseau de chauffage urbain à travers un second côté du premier échangeur de chaleur (104), moyennant quoi la chaleur est transférée du liquide d'épuration jusqu'à l'eau de chauffage urbain,
**caractérisé en ce que** le procédé comprend :
- le transport d'un liquide de stockage de chaleur depuis une partie supérieure d'un accumulateur de chaleur (107) à travers un premier côté d'un deuxième échangeur de chaleur (108) jusqu'à une partie inférieure de l'accumulateur de chaleur (107),
- le transport de l'eau de chauffage urbain du côté retour du réseau de chauffage urbain à travers un second côté du deuxième échangeur de chaleur (108) jusqu'à un côté alimentation du réseau de chauffage urbain, moyennant quoi la chaleur est transférée du liquide de stockage de chaleur jusqu'à l'eau de chauffage urbain,
- après que le liquide de stockage de chaleur provenant de la partie supérieure de l'accumulateur de chaleur (107) a traversé le premier côté du deuxième échangeur de chaleur (108), le transport du liquide de stockage de chaleur à travers un premier côté d'un évaporateur (114),
- après que l'eau de chauffage urbain provenant du côté retour du réseau de chauffage urbain a traversé le second côté du deuxième échangeur de chaleur (108), le transport de l'eau de chauffage urbain à travers un premier côté d'un condenseur (115), et
- le transport des fluides caloporteurs entre un second côté de l'évaporateur (114) et un second côté du condenseur (115), moyennant quoi la chaleur est transférée depuis le liquide de stockage de chaleur jusqu'à l'eau de chauffage urbain.

8. Procédé selon la revendication 7, **caractérisé en ce que** le procédé comprend :
- après que l'eau de chauffage urbain provenant du côté retour du réseau de chauffage urbain a traversé le premier côté du condenseur (115), le chauffage de l'eau de chauffage urbain avec une unité de chauffage (120).
